# FASCICULE DE BREVET EUROPEEN

(11) **EP 3 635 881 B1**
(45) Date de publication et mention de la délivrance du brevet: **13.09.2023**
(21) Numéro de dépôt: 18728423.7
(22) Date de dépôt: 08.06.2018
(51) Int. Cl.: H04B 7/185, H04B 7/204

(54) **SATELLITE DE TÉLÉCOMMUNICATIONS, PROCÉDÉ DE FORMATION DE FAISCEAUX ET PROCÉDÉ DE FABRICATION D'UNE CHARGE UTILE DE SATELLITE**
TELEKOMMUNIKATIONSSATELLIT, STRAHLFORMUNGSVERFAHREN UND VERFAHREN ZUR HERSTELLUNG EINER SATELLITENNUTZLAST
TELECOMMUNICATIONS SATELLITE, BEAMFORMING METHOD AND METHOD FOR MANUFACTURING A SATELLITE PAYLOAD

(30) Priorité: 09.06.2017 FR 1755169
(43) Date de publication de la demande: 15.04.2020
(73) Titulaire: Airbus Defence and Space SAS, 31402 Toulouse Cedex 4 (FR); Centre National d'Etudes Spatiales (CNES), 75001 Paris (FR)
(72) Inventeur: TUGEND, Vincent, 31402 Toulouse Cedex 4 (FR)
(74) Mandataire: Ipside
(86) Numéro de dépôt international: PCT/EP2018/065195
(87) Numéro de publication internationale: WO 2018/224662

(56) Documents cités:
- EP-A1- 2 779 306
- US-A- 5 115 248
- US-A- 5 936 591
- US-A1- 2014 333 498
- US-A1- 2016 308 603
- US-B1- 6 240 072

## Description

### DOMAINE TECHNIQUE

La présente invention appartient au domaine des systèmes de télécommunications par satellite, et concerne un satellite comportant une antenne multifaisceaux, ainsi qu'un procédé de formation de faisceaux et un procédé de fabrication d'une charge utile de satellite de télécommunications.

### ÉTAT DE LA TECHNIQUE

De manière conventionnelle, un satellite de télécommunications comporte une charge utile équipée de moyens adaptés à échanger des données avec une ou plusieurs stations passerelles terrestres, et avec un ou plusieurs terminaux utilisateurs terrestres. Par « terrestre », on entend à la surface de la Terre, notamment à même le sol, en haut d'un bâtiment, d'un pylône, etc., immobile ou mobile (véhicule terrestre, maritime ou aéronautique).

Chaque station passerelle réalise, pour le satellite, un point d'accès à un coeur de réseau terrestre. Ainsi, une station passerelle qui reçoit, à partir du coeur de réseau, des données à destination d'un terminal utilisateur les émet à destination du satellite qui les retransmet à destination dudit terminal utilisateur. De manière analogue, le terminal utilisateur peut émettre des données à destination du satellite, qui les retransmet à destination d'une station passerelle, qui les retransmet vers le coeur de réseau.

De nos jours, il existe un besoin important d'augmenter la capacité des systèmes de télécommunications par satellite, notamment pour offrir des services haut débit, dits à bande large (« broadband » dans la littérature anglo-saxonne), et/ou pour desservir plus de terminaux utilisateurs, etc. De préférence, une telle augmentation de capacité doit s'accompagner d'une grande flexibilité et/ou d'une grande couverture géographique.

Toutefois, une telle augmentation de la capacité et/ou de la flexibilité et/ou de la couverture géographique s'accompagne généralement, avec les architectures conventionnelles de charges utiles, d'une forte augmentation de la complexité, de la masse et du volume de la charge utile du satellite. Les documents EP2779306 et US5115248 divulguent un satellite de télécommunications selon l'art antérieur.

### EXPOSÉ DE L'INVENTION

La présente invention a pour objectif de remédier à tout ou partie des limitations des solutions de l'art antérieur, notamment celles exposées ci-avant.

A cet effet, et selon un premier aspect, l'invention concerne un satellite de télécommunications destiné à être placé en orbite terrestre, comportant une antenne comportant un réflecteur et un réseau de sources, dans lequel :
- ledit satellite comporte des réseaux de formation de faisceaux analogiques adaptatifs, lesdits réseaux de formation de faisceaux analogiques adaptatifs étant reliés à des groupes de sources respectifs différents du réseau de sources,
- chaque réseau de formation de faisceaux analogique adaptatif est adapté à activer simultanément un nombre prédéterminé de faisceaux desservant des zones géographiques respectives à l'intérieur d'une région géographique à la surface de la Terre,
- ledit satellite comporte un module de commande desdits réseaux de formation de faisceaux analogiques adaptatifs, configuré pour modifier les faisceaux actifs de chaque réseau de formation de faisceaux analogique adaptatif,
- chaque groupe de sources comporte des sources partagées avec d'autres groupes de sources,
- les régions géographiques desservies par des réseaux de formation de faisceaux analogiques adaptatifs différents sont différentes et au moins une région géographique présente un recouvrement géographique d'au moins 30% avec d'autres régions géographiques.

Ainsi, le réseau de sources est décomposé en plusieurs groupes de sources desservant des régions géographiques respectives différentes, chaque groupe de sources comportant un nombre réduit de sources par rapport au nombre total de sources du réseau. Chaque groupe de sources est relié à un réseau de formation de faisceaux analogique adaptatif. Chaque réseau de formation de faisceaux analogique adaptatif est adapté à former de nombreux faisceaux possibles à l'intérieur de la région géographique associée, toutefois, seul un nombre limité de faisceaux doivent être activés simultanément, de sorte que les réseaux de formation de faisceaux analogiques adaptatifs, qui desservent un nombre réduit de sources, sont peu complexes à réaliser.

En outre, chaque groupe de sources partage des sources avec d'autres groupes de sources, de sorte qu'il est possible de desservir des régions géographiques différentes présentant un fort taux de recouvrement géographique entre elles. Ainsi, au niveau d'un recouvrement géographique, le nombre maximal de faisceaux actifs pouvant être formés est augmenté puisqu'un recouvrement géographique est desservi par au moins deux réseaux de formation de faisceaux analogiques adaptatifs.

Ainsi le satellite peut former un grand nombre de faisceaux possibles, et permet donc d'avoir une grande diversité en termes de zones géographiques pouvant être desservies à la surface de la Terre. Ces zones géographiques ne peuvent pas être toutes desservies en même temps, mais il est possible de desservir si nécessaire toutes ces zones géographiques en modifiant au cours du temps l'ensemble de faisceaux actifs, réalisant ainsi un saut de faisceaux actifs (ou « beam hopping » dans la littérature anglo-saxonne). Bien que le nombre maximal de faisceaux pouvant être activés simultanément par chaque réseau de formation de faisceaux analogique adaptatif est limité, il est néanmoins possible de former simultanément un grand nombre de faisceaux actifs au niveau d'un recouvrement géographique entre régions géographiques. Typiquement, les recouvrements géographiques sont sélectionnés pour correspondre à des zones nécessitant une forte capacité de communication.

Dans des modes particuliers de réalisation, le satellite peut comporter en outre l'une ou plusieurs des caractéristiques suivantes, prises isolément ou selon toutes les combinaisons techniquement possibles.

Dans des modes particuliers de réalisation, chaque groupe de sources comporte au moins 30% de sources partagées avec d'autres groupes de sources, voire au moins 50% de sources partagées ou davantage.

Dans des modes particuliers de réalisation, le satellite comporte, pour au moins un groupe de sources, deux réseaux de formation de faisceaux analogiques adaptatifs de polarisations respectives différentes.

Dans des modes particuliers de réalisation, le satellite comporte, pour chaque groupe de sources, deux réseaux de formation de faisceaux analogiques adaptatifs de polarisations respectives différentes.

Dans des modes particuliers de réalisation, au moins deux régions géographiques sont de superficies différentes.

Dans des modes particuliers de réalisation, les groupes de sources comportent le même nombre de sources.

Dans des modes particuliers de réalisation, au moins deux groupes de sources comportent un nombre différent de sources.

Dans des modes particuliers de réalisation, au moins deux réseaux de formation de faisceaux analogiques adaptatifs sont adaptés à former simultanément des nombres respectifs différents de faisceaux.

Dans des modes particuliers de réalisation, le réseau de sources est décalé par rapport à un point focal du réflecteur de l'antenne.

Dans des modes particuliers de réalisation, le satellite comporte en outre au moins un réseau de formation de faisceaux analogique statique relié à un groupe de sources du réseau de sources.

Dans des modes particuliers de réalisation, les réseaux de formation de faisceaux analogiques adaptatifs sont adaptés à former des faisceaux utilisant des bandes fréquentielles respectives différentes.

Dans des modes particuliers de réalisation, au moins un groupe de sources est constitué par des sources agencées de manière irrégulière.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de système de télécommunications par satellite,
- Figure 2 : une représentation schématique d'un exemple de réalisation d'une charge utile de satellite,
- Figure 3 : un exemple de réalisation d'un réseau de sources et de partition dudit réseau en groupes de sources,
- Figure 4 : des exemples de régions géographiques desservies à la surface de la Terre,
- Figure 5 : une représentation schématique d'un mode préféré de réalisation d'une charge utile de satellite,
- Figure 6 : un diagramme illustrant les principales étapes d'un procédé de formation de faisceaux,
- Figure 7 : une représentation schématique illustrant un exemple d'utilisation de la charge utile multifaisceaux de la figure 5,
- Figure 8 : un diagramme illustrant les principales étapes d'un procédé de fabrication d'une charge utile de satellite.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

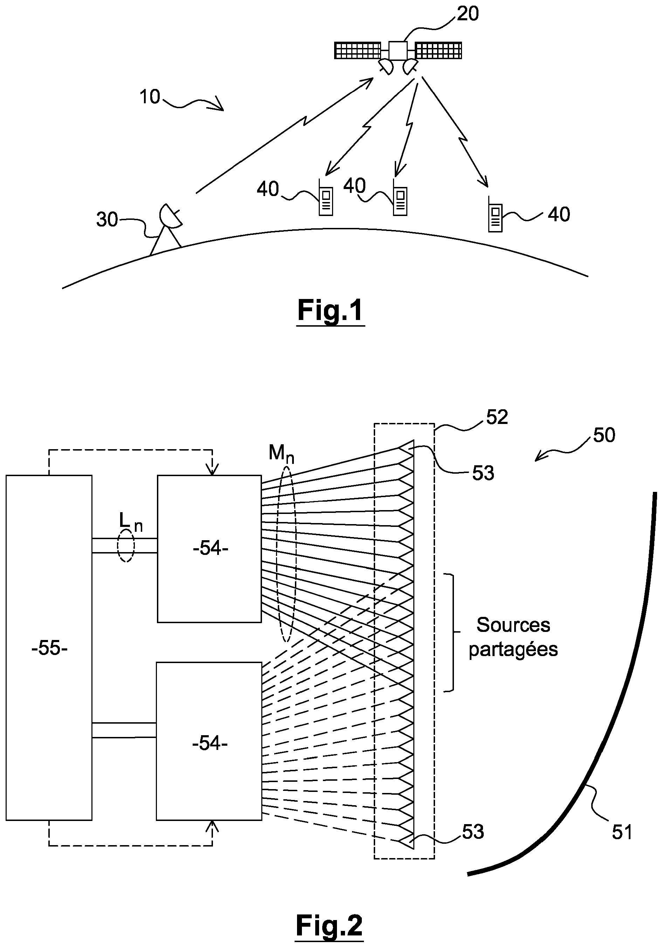

La figure 1 représente schématiquement un exemple de réalisation d'un système 10 de télécommunications par satellite.

Tel qu'illustré par la figure 1, le système 10 de télécommunications par satellite comporte au moins un satellite 20, au moins une station passerelle 30 terrestre et au moins un terminal utilisateur 40 terrestre.

Dans la suite de la description, on se place de manière non limitative dans le cas où le satellite 20 est en orbite géostationnaire (« Geostationary Orbit » ou GEO dans la littérature anglo-saxonne). Rien n'exclut cependant, suivant d'autres exemples, de considérer une orbite terrestre non géostationnaire, telle qu'une orbite basse altitude (« Low Earth Orbit » ou LEO), une orbite moyenne altitude (« Medium Earth Orbit » ou MEO), etc.

De manière conventionnelle, le satellite 20 comporte une charge utile 50 adaptée à échanger des données avec la station passerelle 30 sur un lien passerelle (« feeder link » dans la littérature anglo-saxonne), et à échanger des données avec chaque terminal utilisateur 40 sur un lien utilisateur (« feeder link » dans la littérature anglo-saxonne). La présente invention est applicable en émission et/ou en réception sur le lien utilisateur et/ou sur le lien passerelle.

Dans la suite de la description, on se place de manière non limitative dans le cas d'une formation de faisceaux sur le lien utilisateur, en émission (c'est-à-dire un échange de données depuis le satellite 20 vers les terminaux utilisateurs 40, lesdites données ayant été préalablement reçues sur le lien passerelle). Les émissions sur le lien utilisateur s'effectuent par exemple dans une ou plusieurs bandes de fréquences parmi les bandes W, Q, V, Ka, Ku, L, S, C, etc. Les exemples donnés ci-après sont cependant applicables, alternativement ou en combinaison, à la réception sur le lien utilisateur, et/ou à l'émission et/ou à la réception sur le lien passerelle.

La figure 2 représente schématiquement un exemple de réalisation d'une charge utile 50 destinée à être embarquée dans le satellite 20.

Tel qu'illustré par la figure 2, la charge utile 50 comporte, pour l'émission de données vers des terminaux utilisateurs 40, une antenne comportant un réflecteur 51 et un réseau 52 de sources 53. De préférence, le réseau 52 de sources 53 est décalé par rapport à un point focal du réflecteur 51 de l'antenne, et est agencé entre ledit point focal et le réflecteur 51 (« Defocused Array Fed Reflector » ou DAFR dans la littérature anglo-saxonne). Rien n'exclut cependant, suivant d'autres exemples, d'avoir le réseau de sources 53 positionné au niveau dudit point focal du réflecteur 51 (« Array Fed Reflector » ou AFR dans la littérature anglo-saxonne).

La charge utile 50 comporte également plusieurs réseaux de formation de faisceaux 54 (« beamforming network » ou BFN dans la littérature anglo-saxonne) analogiques adaptatifs qui sont reliés aux différentes sources 53 du réseau. Par « analogique », on entend que chacun de ces réseaux de formation de faisceaux effectue des traitements sur des signaux analogiques (électriques ou micro-ondes) et non sur des signaux numériques. Par « adaptatif », on entend que les faisceaux formés par chacun de ces réseaux de formation faisceaux peuvent varier au cours du temps. Les réseaux de formation de faisceaux 54 analogiques adaptatifs peuvent être de toute type connu de l'homme du métier, y compris de type déphaseur (« phase shifter » dans la littérature anglo-saxonne), de type à retard réel (« true time delay » dans la littérature anglo-saxonne).

Chaque réseau de formation de faisceaux 54 analogique adaptatif comporte un ou des ports d'entrée sur lesquels il reçoit un ou des signaux comportant des données à émettre, et plusieurs ports de sortie reliés à différentes sources 53 du réseau 52. Chaque réseau de formation de faisceaux 54 analogique adaptatif comporte en outre par exemple, de manière connue de l'homme du métier, des circuits duplicateurs qui dupliquent chaque signal reçu sur un port d'entrée, ainsi que :
- des circuits déphaseurs adaptés à un introduire un déphasage de valeur contrôlable et des amplificateurs de gain contrôlable pour les réseaux de formation de faisceaux de type déphaseur,
- des circuits à retards temporels de valeur contrôlable et des amplificateurs de gain contrôlable pour les réseaux de formation de faisceaux de type à retard réel.

Un réseau de formation de faisceaux 54 analogique adaptatif fournit sur les ports de sortie des répliques de chaque signal présentant des phases (réseaux de formation de faisceaux de type déphaseur) ou des retards temporels (réseau de formation de faisceaux de type à retard réel) et des gains respectifs permettant de former des faisceaux prédéterminés, en collaboration avec les sources 53 et le réflecteur 51 de l'antenne.

Lesdits réseaux de formation de faisceaux 54 analogiques adaptatifs sont reliés à des groupes de sources respectifs différents du réseau de sources 53. Ainsi, chaque réseau de formation de faisceaux 54 analogique adaptatif est relié à un groupe particulier de sources 53 du réseau 52. Chaque faisceau est donc formé au moyen de plusieurs sources 53 (« Multiple Feeds Per Beam » ou MFPB dans la littérature anglo-saxonne).

Par exemple, la charge utile 50 comporte N_{GS} groupes de sources 53 et donc au moins N_{GS} réseaux de formation de faisceaux 54 analogiques adaptatifs, comportant chacun Lₙ ports d'entrée et Mₙ ports de sortie reliés à Mₙ sources 53 du réseau 52, 1 ≤ n ≤ N_{GS}. Le nombre total de sources 53 du réseau 52 est désigné par N_{S}, et le nombre Mₙ de sources de chaque groupe de sources est strictement inférieur à N_{S}, 1 ≤ n ≤ N_{GS}. Pour le réseau de formation de faisceaux 54 analogique adaptatif de rang n, 1 ≤ n ≤ N_{GS}, le nombre Lₙ de ports d'entrée correspond au nombre maximal de faisceaux que ledit réseau de formation de faisceaux 54 analogique adaptatif peut activer simultanément pour desservir des zones géographiques respectives à l'intérieur d'une région géographique prédéterminée à la surface de la Terre. Les zones géographiques qui peuvent être desservies par des faisceaux à l'intérieur de la région géographique prédéterminée peuvent être soit prédéfinies selon une répartition prédéfinie à l'intérieur de ladite région géographique, soit définies de façon opportuniste et dynamique afin, par exemple, de centrer un ou plusieurs faisceaux sur des villes ou des zones géographiques à très forte demande. Le nombre de zones géographiques différentes pouvant être desservies au cours du temps par des faisceaux, à l'intérieur de la région géographique associée audit réseau de formation de faisceaux 54 analogique adaptatif, peut être important, par exemple très supérieur (au moins un facteur 10) au nombre Lₙ de ports d'entrée dudit réseau de formation de faisceaux 54 analogique adaptatif. Toutefois, ledit réseau de formation de faisceaux 54 analogique adaptatif ne peut activer simultanément qu'au plus Lₙ faisceaux différents, desservant donc simultanément au plus Lₙ zones géographiques différentes à l'intérieur de ladite la région géographique.

Dans l'exemple non limitatif illustré par la figure 2, le nombre de groupes de sources 53 est égal à deux (N_{GS} = 2), de même que le nombre de réseaux de formation de faisceaux 54 analogiques adaptatifs. Rien n'exclut cependant de considérer un nombre de groupes de sources plus important. Notamment, si le nombre N_{S} de sources 53 du réseau 52 est important (un ou plusieurs milliers de sources 53), alors la charge utile 50 peut comporter typiquement une ou plusieurs centaines de groupes de sources.

Dans des modes préférés de réalisation, le nombre Lₙ de ports d'entrée (et de faisceaux pouvant être activés simultanément) est très inférieur (au moins un facteur 10) au nombre Mₙ de ports de sortie (et de sources du groupe de sources), afin de réduire la complexité de chaque réseau de formation de faisceaux 54 analogique adaptatif.

Il est à noter que le nombre Lₙ de ports d'entrée et le nombre Mₙ de ports de sortie peut varier d'un réseau de formation de faisceaux 54 analogique adaptatif à un autre. Notamment, le nombre Lₙ de ports d'entrée (et de faisceaux pouvant être activés simultanément) peut être plus important pour un réseau de formation de faisceaux 54 analogique adaptatif desservant une région géographique ayant des besoins importants en termes de capacité de communication, etc. De même, le nombre Mₙ de ports de sortie (et de sources du groupe de sources) peut être plus important pour un réseau de formation de faisceaux 54 analogique adaptatif devant former des faisceaux très directifs et/ou desservant des zones géographiques de forme complexe, etc.

Dans la suite de la description, on se place de manière non limitative dans le cas où les réseaux de formation de faisceaux 54 analogiques ont tous le même nombre L de ports d'entrée et le même nombre M de ports de sortie (de sorte que les groupes de sources ont tous le même nombre M de sources).

Tel qu'illustré par la figure 2, la charge utile 50 comporte un module 55 de commande desdits réseaux de formation de faisceaux 54 analogiques adaptatifs, configuré pour modifier les faisceaux actifs de chaque réseau de formation de faisceaux analogique adaptatif. Le module 55 de commande comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter. Alternativement ou en complément, le module 55 de commande comporte un ou des circuits logiques programmables (FPGA, PLD, etc.), et/ou un ou des circuits intégrés spécialisés (ASIC, etc.), et/ou un ensemble de composants électroniques discrets, etc.

Dans l'exemple illustré par la figure 2, et de manière non limitative, le module 55 de commande fournit également les signaux en entrée des réseaux de formation de faisceaux 54 analogiques adaptatifs. Le module 55 de commande peut comporter à cet effet, dans des modes particuliers de réalisation, un ou plusieurs convertisseurs analogique / numérique pour la conversion des signaux reçus sur le lien passerelle, et un ou plusieurs convertisseurs numérique / analogique pour la conversion des signaux à émettre sur le lien utilisateur, à fournir en entrée des réseaux de formation de faisceaux 54 analogiques adaptatifs. Rien n'exclut cependant, suivant d'autres exemples, que les signaux soient fournis en entrée des réseaux de formation de faisceaux 54 analogiques adaptatifs par un équipement distinct du module 55 de commande, pouvant notamment acheminer de façon analogique les signaux reçus sur le lien passerelle vers lesdits réseaux de formation de faisceaux 54 analogiques adaptatifs.

Tel qu'illustré par la figure 2, chaque groupe de sources comporte des sources 53 partagées avec d'autres groupes de sources. En d'autres termes, des sources 53 appartiennent à plusieurs groupes de sources. De la sorte, les régions géographiques desservies par les différents réseaux de formation de faisceaux 54 analogiques adaptatifs peuvent présenter un fort taux de recouvrement géographique entre elles. Ainsi, au niveau des recouvrements géographiques, le nombre maximal de faisceaux actifs pouvant être formés est augmenté puisque chaque recouvrement géographique est desservi par au moins deux réseaux de formation de faisceaux 54 analogiques adaptatifs. Au moins une région géographique, et de préférence chacune des régions géographiques, présente un recouvrement géographique d'au moins 30% avec d'autres régions géographiques desservies par le satellite 20, afin de permettre d'avoir des surfaces importantes à la surface de la Terre pour lesquelles il est possible de former des faisceaux simultanément avec plusieurs réseaux de formation de faisceaux 54 analogiques adaptatifs. Le taux de recouvrement peut être, dans des modes particuliers de mise en oeuvre, supérieur à 50% pour tout ou partie des régions géographiques. Notamment, il est possible d'avoir une région géographique présentant un taux de recouvrement de 100% avec d'autres régions géographiques, c'est-à-dire étant entièrement desservie par un ou plusieurs autres réseaux de formation de faisceaux 54 analogiques adaptatifs. Une telle région géographique vise à renforcer localement la capacité maximale de communication pouvant être offerte.

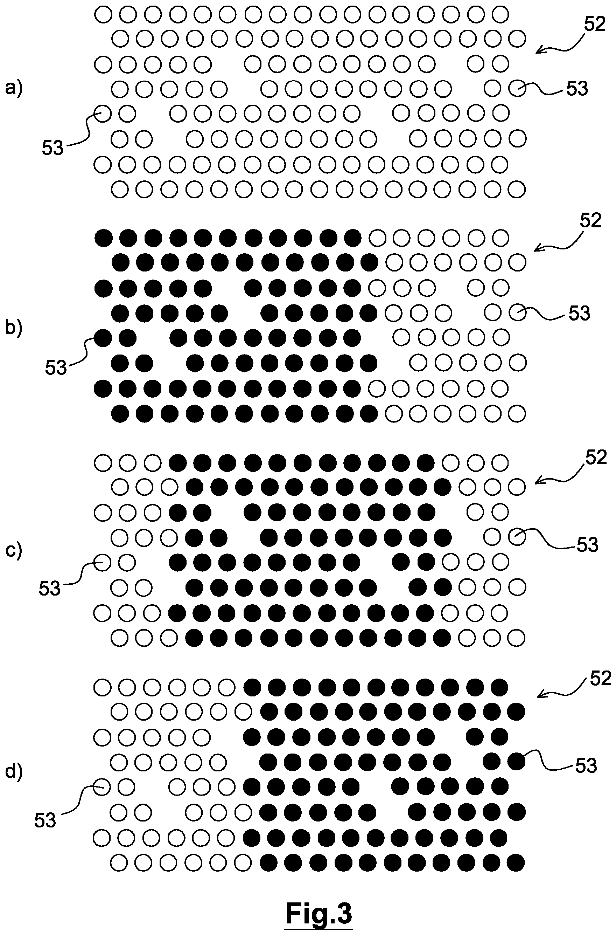

La figure 3 représente schématiquement un exemple non limitatif de réseau 52 de sources 53 et de partition en groupes de sources.

Dans l'exemple illustré par la figure 3, trois groupes de sources sont définis, qui utilisent toutes les sources 53 du réseau de sources, c'est-à-dire que toutes les sources 53 du réseau de sources sont reliées à des réseaux de formation de faisceaux analogiques adaptatifs.

Plus particulièrement, la partie a) de la figure 3 représente, de manière schématique, l'ensemble des sources du réseau de sources, la partie b) représente un premier groupe de sources, la partie c) représente un second groupe de sources et la partie d) représente un troisième groupe de sources. Sur les parties b-d) de la figure 3, les sources 53 utilisées par le groupe de sources considéré sont représentées avec un remplissage noir tandis que les sources 53 non utilisées par le groupe de sources considéré sont représentées avec un remplissage blanc.

Dans l'exemple non limitatif illustré par la figure 3, le taux de sources 53 partagées par chaque groupe de sources est important, par exemple égal ou supérieur à 50%. Ce taux de sources peut également être encore plus important dans certains modes de réalisation de groupes de sources, par exemple égal ou supérieur à 70%. De telles dispositions permettent d'avoir un taux de recouvrement géographique important entre régions géographiques, tout en ayant un gain de faisceau important quelle que soit la zone géographique desservie à l'intérieur d'une région géographique. En outre, plus le taux de sources partagées est important, et plus le partage de puissance peut être important entre les faisceaux formés par des groupes de sources différents, ce qui permet d'avoir une utilisation plus efficace de la puissance embarquée dans le satellite 20.

Tel qu'illustré par la figure 3, l'un (ou plusieurs) groupe de sources peut être constitué par des sources 53 agencées de manière irrégulière. On constate en effet que chaque groupe de sources 53, dans ces exemples, comporte des trous correspondant à des sources du réseau qui ont été délibérément non installées. La présence de trous dans le réseau de sources impacte peu le rayonnement global de l'antenne. En effet, la suppression de sources est possible dans le cas où le réseau 52 de sources 53 est décalé par rapport au point focal du réflecteur 51 (par exemple dans le cas d'une antenne DAFR), car plusieurs sources 53 sont utilisées pour former un faisceau. Par contre, en prévoyant de tels trous, le nombre total de sources est réduit par rapport à des sources installées de manière régulière, de sorte que le coût de fabrication et la masse totale du réseau de sources sont réduits.

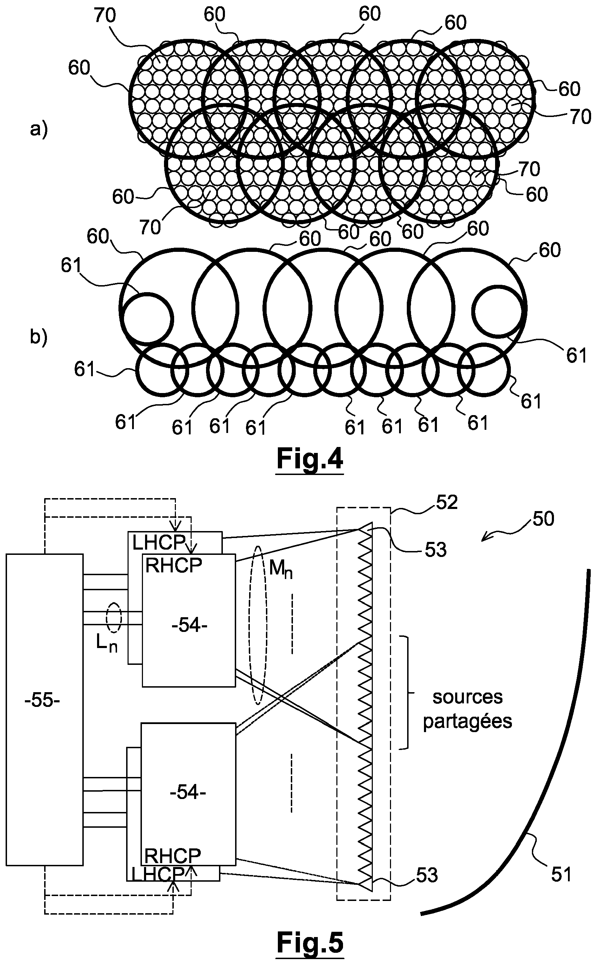

La figure 4 représente schématiquement deux exemples de régions géographiques desservies à la surface de la Terre par la charge utile 50 embarquée dans le satellite 20 en orbite terrestre. A des fins de lisibilité de la figure 4, les régions géographiques sont représentées à la surface de la Terre comme étant toutes de forme sensiblement circulaire. Rien n'exclut cependant, suivant d'autres exemples non illustrés par des figures, d'avoir des régions géographiques de forme plus complexe.

Tel qu'indiqué précédemment, chaque région géographique présente un recouvrement géographique avec d'autres régions géographiques. Au niveau d'un recouvrement géographique, le nombre maximal de faisceaux pouvant être activés simultanément correspond à K·L, K étant le nombre de réseaux de formation de faisceaux 54 analogiques adaptatifs, égal ou supérieur à 2, desservant ledit recouvrement géographique.

Dans la partie a) de la figure 4, les différentes régions géographiques 60 ont sensiblement la même superficie. A l'intérieur d'une région géographique 60, les zones géographiques 70 desservies par des faisceaux différents peuvent indifféremment de superficies différentes ou sensiblement de même superficie. Dans l'exemple non limitatif illustré par la partie a) de la figure 4, les zones géographiques 70 sont considérées comme étant toutes de même superficie à l'intérieur de chaque région géographique 60, et d'une région géographique à une autre région géographique.

Dans la partie b) de la figure 4, les différentes régions géographiques n'ont pas toutes la même superficie. Plus particulièrement, la partie b) de la figure 4 représente des régions géographiques 60 de grande superficie et des régions géographiques de faible superficie. A des fins de lisibilité de la partie b) de la figure 4, les zones géographiques à l'intérieur des régions géographiques 60, 61 ne sont pas représentées. Toutefois, les zones géographiques desservies à l'intérieur d'une région géographique 60 de grande superficie sont de préférence de superficie supérieure à celle des zones géographiques desservies à l'intérieur d'une région géographique 61 de faible superficie. Tel qu'illustré par la partie b) la figure 4, certaines régions géographiques 61 de faible superficie présentent un recouvrement total (100%) avec une région géographique 60 de grande superficie, et visent à offrir localement dans ladite région géographique 60 de grande superficie une capacité de communication plus importante.

Il est à noter que les différents faisceaux peuvent utiliser les mêmes bandes fréquentielles. En particulier, de préférence, chaque faisceau formé peut utiliser l'ensemble du spectre fréquentiel attribué au système 10 de télécommunications par satellite. Rien n'exclut cependant, suivant d'autres exemples, d'avoir des réseaux de formation de faisceaux 54 analogiques adaptatifs adaptés à former des faisceaux utilisant des bandes fréquentielles respectives différentes, qui peuvent varier d'un faisceau à un autre, et qui peuvent de préférence varier au cours du temps. Par exemple, si deux faisceaux doivent être formés pour desservir des zones géographiques adjacentes, il est possible d'utiliser dans ces faisceaux des bandes fréquentielles respectives disjointes, afin de limiter les interférences. En outre, il peut également s'avérer nécessaire, pour des contraintes réglementaires, d'éviter certaines bandes fréquentielles dans certaines zones géographiques.

La figure 5 représente schématiquement un mode préféré de réalisation de la charge utile 50 du satellite 20. Dans l'exemple illustré par la figure 5, chaque groupe de sources 53 est relié à deux réseaux de formation de faisceaux 54 analogiques adaptatifs de polarisations respectives différentes.

Dans l'exemple illustré par la figure 5, chaque groupe de sources 53 est relié à un réseau de formation de faisceaux 54 analogique adaptatif en polarisation circulaire droite (désigné par « RHCP » dans la figure 5) et un réseau de formation de faisceaux 54 analogique adaptatif en polarisation circulaire gauche (désigné par « LHCP » dans la figure 5). Les sources 53 correspondantes du réseau 52 sont alors à double polarisation, par exemple en polarisation circulaire droite et en polarisation circulaire gauche.

De telles dispositions permettent d'augmenter la capacité de communication du fait qu'il est alors possible de former deux fois plus de faisceaux avec un même groupe de sources 53, en formant des faisceaux de polarisations différentes. L'utilisation de faisceaux de polarisations différentes permet de limiter les interférences entre faisceaux, de sorte qu'il est possible de former simultanément, à un instant donné, deux faisceaux de polarisations différentes desservant une même zone géographique, sans que lesdits faisceaux de polarisations différentes n'interfèrent entre eux. Ainsi, l'utilisation de faisceaux de polarisations différentes permet de doubler localement au niveau de cette zone géographique la capacité de communication. Toutefois, l'utilisation de faisceaux de polarisations différentes peut également être utilisée pour desservir simultanément, à un instant donné, un nombre plus grand de zones géographiques. En effet, du fait de la présence de deux réseaux de formation de faisceaux 54 analogiques adaptatifs de polarisations respectives différentes, il est possible de former simultanément des faisceaux de polarisations respectives différentes, par exemple en polarisation circulaire droite et en polarisation circulaire gauche, les faisceaux en polarisation circulaire droite desservant des zones géographiques qui peuvent être différentes des zones géographiques desservies simultanément par des faisceaux en polarisation circulaire gauche.

Il est à noter que l'exemple illustré par la figure 5 représente un mode préféré de réalisation dans lequel chaque groupe de sources 53 est relié à deux réseaux de formation de faisceaux 54 analogiques adaptatifs de polarisations respectives différentes. Rien n'exclut cependant, suivant d'autre exemples, d'avoir un ou plusieurs groupes de sources 53 qui ne sont chacun reliés qu'à un seul réseau de formation de faisceaux 54 analogiques adaptatifs. Le cas échéant, les groupes de sources 53 qui sont reliés à deux réseaux de formation de faisceaux 54 analogiques adaptatifs sont ceux qui sont destinés à desservir des régions géographiques ayant de besoins importants en termes de capacité de communications. Les réseaux de formation de faisceaux 54 de polarisations différentes reliés à un même groupe de sources 53 peuvent comporter le même nombre de ports d'entrée ou des nombres différents de ports d'entrée, selon la demande de capacité de communication des régions géographiques concernées.

Tel qu'indiqué précédemment, le module 55 de commande contrôle les réseaux de formation de faisceaux 54 analogiques adaptatifs, afin de modifier au cours du temps les faisceaux actifs de chaque réseau de formation de faisceaux analogique adaptatif. Ainsi, le module 55 de commande met en oeuvre tout ou partie des étapes d'un procédé 80 de formation de faisceaux qui réalise, au cours du temps, un saut de faisceaux actifs dans chacune des régions géographiques desservies par les réseaux de formation de faisceaux 54 analogiques adaptatifs.

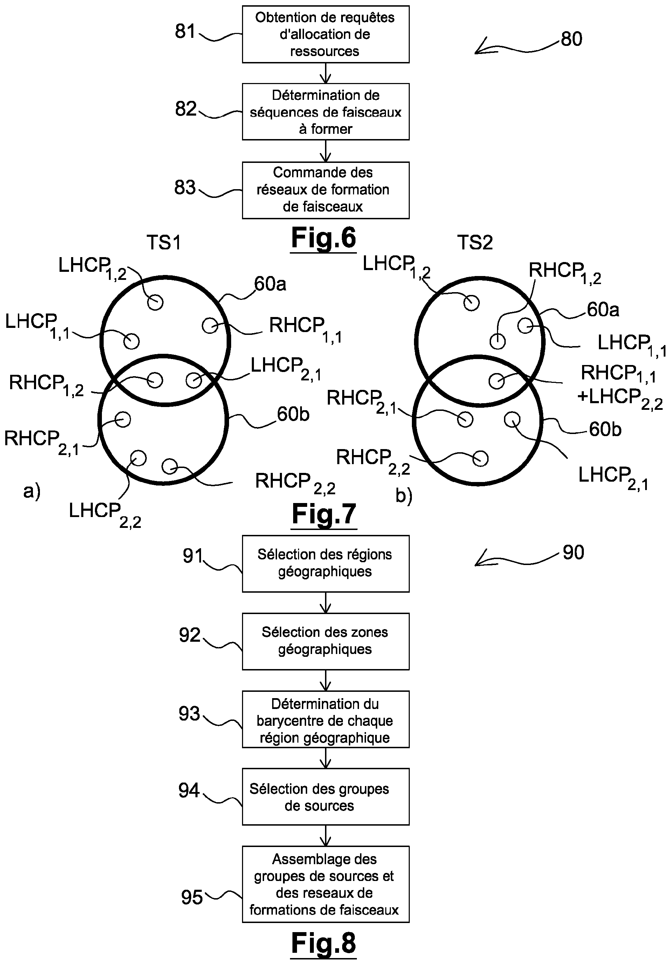

La figure 6 représente schématiquement les principales étapes d'un procédé 80 de formation de faisceaux. Tel qu'illustré par la figure 6, le procédé 80 de formation de faisceaux comporte :
- une étape 81 d'obtention de requêtes d'allocation de ressources pour échanger des données avec des terminaux utilisateurs se trouvant dans des zones géographiques desservies par le satellite,
- une étape 82 de détermination, pour chaque réseau de formation de faisceaux 54 analogique adaptatif d'une séquence de faisceaux à former en fonction desdites requêtes d'allocation de ressources,
- une étape 83 de commande des réseaux de formation de faisceaux 54 analogiques adaptatifs de sorte à former lesdites séquences de faisceaux déterminées en fonction des requêtes d'allocation de ressources.

Les requêtes d'allocation de ressources sont par exemple obtenues (étape 81) par une station sol, telle que la station passerelle 30, qui détermine (étape 82) les séquences de faisceaux à former pour satisfaire lesdites requêtes d'allocation de ressources sur une fenêtre temporelle prédéterminée. Chaque séquence de faisceaux correspond aux différents faisceaux à activer successivement au cours de cette fenêtre temporelle prédéterminée pour satisfaire, dans la région géographique correspondante, lesdites requêtes d'allocation de ressources. Lesdites séquences de faisceaux sont ensuite transmises au satellite 20, et sont réalisées par le module 55 de commande (étape 83) en commandant les réseaux de formation de faisceaux 54 analogiques adaptatifs. Rien n'exclut cependant, suivant d'autres exemples, d'exécuter également au niveau du satellite 20, par le module 55 de commande, l'étape 82 de détermination des séquences de faisceaux et éventuellement l'étape 81 d'obtention des requêtes d'allocation de ressources.

Tel qu'indiqué précédemment, si cela s'avère nécessaire pour satisfaire les requêtes d'allocation de ressources, le procédé 80 de formation de faisceaux peut comporter la commande d'au moins deux réseaux de formation de faisceaux 54 analogiques adaptatifs différents pour former au moins deux faisceaux desservant une ou plusieurs zones géographiques se trouvant dans le recouvrement géographique des régions géographiques desservies par lesdits au moins deux réseaux de formation de faisceaux 54 analogiques adaptatifs. Dans le cas où lesdits au moins deux réseaux de formation de faisceaux 54 analogiques adaptatifs sont commandés pour former au moins deux faisceaux desservant une même zone géographique, lesdits au moins deux faisceaux sont de préférence de polarisations respectives différentes et/ou utilisent des bandes fréquentielles respectives disjointes (c'est-à-dire sans recouvrement fréquentiel entre elles), afin de limiter les interférences.

Tel qu'indiqué précédemment, l'étape 82 de détermination vise à déterminer les séquences de faisceaux à former pour satisfaire au mieux les requêtes d'allocation de ressources sur une fenêtre temporelle prédéterminée.

Les requêtes d'allocation de ressources permettent d'identifier les zones géographiques à desservir au cours de la fenêtre temporelle, et donc les réseaux de formation de faisceaux 54 analogiques adaptatifs (et groupes de sources) permettant de desservir les zones géographiques correspondantes.

Pour chaque réseau de formation de faisceaux 54 analogique adaptatif, la fenêtre temporelle peut être décomposée en un ou plusieurs intervalles temporels consécutifs (« time slot » dans la littérature anglo-saxonne). La décomposition en intervalles temporels de la fenêtre temporelle peut varier d'un réseau de formation de faisceaux 54 analogiques adaptatifs à un autre. En outre, les intervalles temporels de la fenêtre temporelle peuvent être de même durée, constante ou variable d'une fenêtre temporelle à une autre, ou être de durées respectives non toutes identiques, constantes ou variables d'une fenêtre temporelle à une autre. Dans la suite de la description, on se place de manière non limitative dans le cas où tous les intervalles temporels ont la même durée, qui peut être une constante prédéfinie ou qui peut être déterminée en fonction des requêtes d'allocation de ressources.

Chaque séquence de faisceaux à former par un réseau de formation de faisceaux 54 analogique adaptatif comporte donc plusieurs listes de faisceaux à former associées respectivement aux différents intervalles temporels de la fenêtre temporelle. L'étape 82 de détermination vise donc à déterminer plusieurs telles séquences de faisceaux à former associées respectivement aux différents réseaux de formation de faisceaux 54 analogiques adaptatifs, permettant de satisfaire au mieux les différentes requêtes d'allocation de ressources.

Au cours de l'étape 82 de détermination, il est possible grâce à la charge utile 50 de modifier à chaque intervalle de temps, dans le cas d'une zone géographique se trouvant dans un recouvrement géographique, le réseau de formation de faisceaux 54 analogique adaptatif utilisé pour desservir cette zone géographique. C'est un degré de liberté supplémentaire dans l'optimisation de l'allocation de la capacité offerte et cela permet d'équilibrer au mieux la charge sur la totalité de l'antenne de la charge utile.

Une première approche pour déterminer les séquences de faisceaux à former par les différents réseaux de formation de faisceaux 54 analogiques adaptatifs consiste par exemple à choisir dans un premier temps les faisceaux à former au cours des différents intervalles temporels de la fenêtre temporelle, en fonction des requêtes d'allocation de ressources. Ensuite, pour chacun de ces intervalles temporels, on utilise un algorithme d'optimisation (par exemple de type glouton ou autre) pour allouer ces faisceaux aux différents réseaux de formation de faisceaux 54 analogiques adaptatifs avec comme contrainte d'équilibrer la charge sur l'antenne (c'est-à-dire d'activer simultanément un maximum de faisceaux pour chaque réseau de formation de faisceaux 54 analogiques adaptatifs/groupe de sources). Cet algorithme d'optimisation prend en compte (en tant que donnée d'entrée) la liste des réseaux de formation de faisceaux 54 analogiques adaptatifs possibles pour chaque faisceau à former. Dans une telle approche, la définition des faisceaux à former et l'allocation faisceaux à former/réseaux de formation de faisceaux 54 analogiques adaptatifs à utiliser sont enchainées de manière séquentielle, ce qui conduit à une solution rapide mais pouvant être sous-optimale.

Une autre approche non limitative consiste à réaliser une optimisation simultanée de la définition des faisceaux à former et de l'allocation faisceaux à former/réseaux de formation de faisceaux 54 analogiques adaptatifs à utiliser, toujours avec les contraintes de répondre au mieux aux requêtes d'allocation de ressources et d'équilibrer la charge sur l'antenne.

Une fois les séquences de faisceaux à former déterminées (étape 82), les signaux de commande des réseaux de formation de faisceaux 54 analogiques adaptatifs peuvent être déterminés (calculés dynamiquement à bord ou au sol, ou pré-chargés depuis une table statique à bord ou au sol), et appliqués au cours de l'étape 83 de commande.

La figure 7 représente schématiquement un exemple d'utilisation de la charge utile 50 représentée sur la figure 5. Plus particulièrement, la figure 7 représente une première région géographique 60a et une seconde région géographique 60b desservies par deux groupes de sources différents, ainsi que les zones géographiques desservies par les faisceaux formés.

Chaque groupe de sources est relié à deux réseaux de formation de faisceaux 54 analogiques adaptatifs de polarisations respectives différentes, par exemple en polarisation circulaire droite et en polarisation circulaire gauche. Dans l'exemple non limitatif illustré par la figure 7, chaque réseau de formation de faisceaux est adapté à activer simultanément deux faisceaux (L = 2). Ainsi, il est possible de former simultanément :
- dans la première région géographique 60a : deux faisceaux en polarisation circulaire droite, desservant des zones géographiques désignées respectivement par RHCP_{1,1} et RHCP_{1,2}, et deux faisceaux en polarisation circulaire gauche, desservant des zones géographiques désignés respectivement par LHCP_{1,1} et LHCP₁,₂,
- dans la seconde région géographique 60b : deux faisceaux en polarisation circulaire droite, desservant des zones géographiques désignées respectivement par RHCP_{2,1} et RHCP_{2,2}, et deux faisceaux en polarisation circulaire gauche, desservant des zones géographiques désignés respectivement par LHCP_{2,1} et LHCP_{2,2}.

La partie a) de la figure 7 représente les zones géographiques desservies au cours d'un premier intervalle temporel TS1 de la fenêtre temporelle sur laquelle sont définies les séquences de faisceaux à former. La partie b) de la figure 7 représente les zones géographiques desservies au cours d'un second intervalle temporel TS2 de ladite fenêtre temporelle.

Tel qu'illustré par la partie a) de la figure 7, le module 55 de commande contrôle les réseaux de formation de faisceaux 54 pour former, au cours de l'intervalle temporel TS1 et dans le recouvrement géographique entre la première région géographique 60a et la seconde région géographique 60b, des faisceaux RHCP_{1,2} et LHCP_{2,1} desservant des zones géographiques respectives différentes. Les autres faisceaux desservent des zones géographiques qui se trouvent en dehors du recouvrement géographique.

Tel qu'illustré par la partie b) de la figure 7, le module 55 de commande contrôle les réseaux de formation de faisceaux 54 pour former, au cours de l'intervalle temporel TS2 et dans le recouvrement géographique entre la première région géographique 60a et la seconde région géographique 60b, des faisceaux RHCP_{1,1} et LHCP_{2,2} desservant une même zone géographique. Les autres faisceaux desservent des zones géographiques qui se trouvent en dehors du recouvrement géographique.

L'invention permet d'implémenter, au sein d'un même réseau de formation de faisceaux 54 (et donc d'une même région géographique), une répartition de puissance dynamique entre les faisceaux de cette région géographique. Ceci est réalisé en jouant sur les poids complexes de formation de faisceaux, afin de privilégier certains faisceaux par rapport à d'autres en termes de Puissance Isotrope Rayonnée Equivalente (PIRE) en fonction des conditions de propagation ou de capacité de communication à fournir. Quand les conditions de propagation sont défavorables ou la capacité de communication à fournir sur un faisceau est plus importante, il est possible d'augmenter la puissance fournie pour former ce faisceau.

L'invention permet également de pallier à une dégradation progressive des performances lors de la perte de sources/amplificateurs de puissance permettant d'éviter de prévoir une redondance des amplificateurs de puissance à bord du satellite. Ceci permet de réduire les coûts et la durée d'intégration du satellite, tout en garantissant un niveau de qualité de service satisfaisant.

La figure 8 représente schématiquement les principales étapes d'un procédé 90 de fabrication d'une charge utile 50. Tel qu'illustré par la figure 8, le procédé 90 de fabrication comporte, pour une configuration prédéterminée de réflecteur 51 et de réseau de sources 53 :
- une étape 91 de sélection de régions géographiques à desservir à la surface de la Terre, lesdites régions géographiques présentant des recouvrements géographiques entre elles,
- une étape 92 de sélection, pour chaque région géographique, de zones géographiques de ladite région géographique à desservir par des faisceaux différents,
- une étape 93 de détermination, pour chaque région géographique, d'un barycentre des centres des zones géographiques à desservir,
- une étape 94 de sélection, pour chaque région géographique, d'un groupe de sources 53 à utiliser pour desservir la région géographique considérée en fonction du barycentre de ladite région géographique considérée,
- une étape 95 d'assemblage de réseaux de formation de faisceaux 54 analogiques adaptatifs et du réseau 52 de sources 53 de telle sorte que chaque réseau de formation de faisceaux analogique adaptatif est relié à l'un des groupes de sources sélectionné.

En effet, le réflecteur 51 et le réseau de sources 53 sont dimensionnés, de manière conventionnelle, pour desservir un territoire prédéterminé à la surface de la Terre. Les différentes régions géographiques à desservir sont sélectionnées à l'intérieur de ce territoire, en prévoyant notamment des recouvrements géographiques là où une plus forte capacité de communication est susceptible d'être requise. A l'intérieur des régions géographiques ainsi sélectionnées, les zones géographiques pour lesquelles des faisceaux sont susceptibles d'être formés sont également sélectionnées.

Ensuite, pour chaque région géographique, un barycentre des centres des zones géographiques à desservir est déterminé et le groupe de sources à utiliser pour desservir une région géographique est déterminé en fonction du barycentre déterminé pour cette région géographique. Par exemple, le groupe de sources sélectionné pour desservir une région géographique correspond aux sources 53 présentant intrinsèquement (c'est-à-dire en considérant chaque source 53 seule) le meilleur gain dans la direction du barycentre de ladite région géographique. Ainsi, les meilleures sources 53 en termes de gain dans la direction du barycentre de la région géographique sont sélectionnées pour former le groupe de sources 53 à utiliser pour desservir cette région géographique, ce qui permet d'optimiser l'utilisation de la puissance électrique du satellite 20. Le nombre Mₙ de sources de chaque groupe, qui peut varier d'un groupe de sources 53 à un autre. De manière générale, augmenter le nombre de sources d'un groupe permet de réduire les lobes secondaires du diagramme de rayonnement et d'étendre la zone géographique à desservir. Par contre, l'augmentation du nombre de sources d'un groupe entraîne également une augmentation de la complexité du réseau de formation de faisceaux analogique adaptatif associé.

Une fois les groupes de sources 53 déterminés, les réseaux de formation de faisceaux 54 analogiques adaptatifs sont reliés aux groupes de sources 53, afin de réaliser la charge utile 50 du satellite 20.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention décrite ci-dessus est utilisable dans n'importe quelle bande de fréquences, on peut citer à titre d'exemples les bandes de fréquences classiquement utilisées par les systèmes de télécommunications par satellite, telles que : C, L, S, X, Ku, Ka, Q/V, W.

En outre, l'invention a été décrite en considérant principalement une charge utile 50 comportant uniquement des réseaux de formation de faisceaux 54 analogiques adaptatifs. Rien n'exclut cependant, suivant d'autres exemples, d'avoir en outre au moins un réseau de formation de faisceaux analogique statique (non représenté sur les figures) relié à un groupe de sources du réseau 52. Un groupe de sources relié à un réseau de formation de faisceaux analogique statique (c'est-à-dire pour lequel il n'est pas possible de modifier les faisceaux actifs au cours du temps) peut également partager des sources avec des groupes de sources reliés à des réseaux de formation de faisceaux 54 analogiques adaptatifs, voire être confondu avec un groupe de sources 53 relié à un réseau de formation de faisceaux 54 analogique adaptatif.

De plus, l'invention a été décrite en considérant principalement le cas d'une formation de faisceaux pour l'émission sur le lien utilisateur. Toutefois, l'invention est également applicable à la réception sur le lien utilisateur, et/ou à l'émission et/ou à la réception sur le lien passerelle.

Concernant les communications sur le lien passerelle, il est possible d'utiliser les mêmes bandes de fréquences pour les communications de la station passerelle 30 vers le satellite 20 (lien passerelle montant) et les communications du satellite 20 vers la station passerelle 30 (lien passerelle descendant).

Alternativement, il est possible d'utiliser des bandes de fréquences différentes sur le lien passerelle montant et sur le lien passerelle descendant, par exemple utiliser :
- la bande W sur le lien passerelle montant et la bande Ka sur le lien passerelle descendant, ou
- la bande Q/V sur le lien passerelle montant et la bande Ku sur le lien passerelle descendant, ou
- la bande W sur le lien passerelle montant et la bande Ku sur le lien passerelle descendant, ou
- la bande Q/V sur le lien passerelle montant et la bande Ka sur le lien passerelle descendant, etc.

Notamment, utiliser la bande W sur le lien passerelle montant s'avère avantageux par rapport à l'utilisation de la bande Q/V, car le spectre de la bande W est, d'un point de vue contrainte réglementaire, moins morcelé et plus large que celui de la bande Q/V. En effet, les applications à bande large sont souvent fortement asymétriques, beaucoup plus de trafic est à acheminer vers les terminaux utilisateurs qu'il n'en est reçu en provenance des terminaux utilisateurs. Ainsi, il est important d'avoir une bande passante beaucoup plus large sur le lien passerelle montants que sur le lien passerelle descendants.

Ces considérations sur les bandes de fréquences du lien passerelle sont applicables pour différentes orbites de satellites tels que des satellites en orbite GEO, LEO et MEO. Ces considérations sur les bandes de fréquences du lien passerelle sont également applicables à tout type de satellite de télécommunications, y compris à des satellites embarquant des charges utiles différentes de la charge utile 50 selon la présente invention. Ces considérations sur les bandes de fréquences du lien passerelle sont également applicables sur le lien utilisateur.

La description ci-avant illustre clairement que par ses différentes caractéristiques et leurs avantages, la présente invention atteint les objectifs qu'elle s'était fixés. En particulier, la présente invention permet d'offrir une grande flexibilité sur une grande couverture, avec des équipements peu complexes à réaliser. A titre d'exemple, il est possible de considérer un réseau comportant environ 1000 sources 53 (N_{S} ≈ 1000) avec lequel il est possible de former plusieurs milliers de faisceaux différents (typiquement ente 2000 et 3000) au moyen de réseaux de formation de faisceaux 54 adaptatifs analogiques relativement peu complexes, capables de former simultanément entre 2 et 10 faisceaux actifs (2 ≤ Lₙ ≤10) en utilisant par exemple une centaine de sources du réseau (Mₙ ≈ 100, par exemple égal à 96).

## Revendications

1. - Satellite (20) de télécommunications destiné à être placé en orbite terrestre, comportant une antenne comportant un réflecteur (51) et un réseau (52) de sources (53), pour lequel :
- ledit satellite comporte des réseaux de formation de faisceaux (54) analogiques adaptatifs, lesdits réseaux de formation de faisceaux analogiques adaptatifs étant reliés à des groupes de sources respectifs différents du réseau de sources (53), lesdits groupes de sources desservant des régions géographiques respectives différentes à la surface de la Terre,
- chaque réseau de formation de faisceaux (54) analogique adaptatif est adapté à activer simultanément un nombre prédéterminé de faisceaux desservant des zones géographiques (70) respectives à l'intérieur de la région géographique (60, 61) desservie par le groupe de sources auquel est relié ledit réseau de formation de faisceaux,
- ledit satellite comporte un module (55) de commande desdits réseaux de formation de faisceaux analogiques adaptatifs, configuré pour modifier les faisceaux actifs de chaque réseau de formation de faisceaux analogique adaptatif,
- chaque groupe de sources comporte des sources (53) partagées avec d'autres groupes de sources,
**caractérisé en ce que** :
- au moins une région géographique présente un recouvrement géographique d'au moins 30% avec d'autres régions géographiques.

2. - Satellite (20) selon la revendication 1, comportant, pour au moins un groupe de sources, deux réseaux de formation de faisceaux (54) analogiques adaptatifs de polarisations respectives différentes.

3. - Satellite (20) selon la revendication 2, comportant, pour chaque groupe de sources, deux réseaux de formation de faisceaux (54) analogiques adaptatifs de polarisations respectives différentes.

4. - Satellite (20) selon l'une des revendications précédentes, dans lequel au moins deux régions géographiques sont de superficies différentes.

5. - Satellite (20) selon l'une des revendications précédentes, dans lequel les groupes de sources comportent le même nombre de sources.

6. - Satellite (20) selon l'une des revendications 1 à 4, dans lequel au moins deux groupes de sources comportent un nombre différent de sources.

7. - Satellite (20) selon l'une des revendications précédentes, dans lequel au moins deux réseaux de formation de faisceaux (54) analogiques adaptatifs sont adaptés à former simultanément des nombres respectifs différents de faisceaux.

8. - Satellite (20) selon l'une des revendications précédentes, dans lequel le réseau (52) de sources (53) est décalé par rapport à un point focal du réflecteur (51) de l'antenne.

9. - Satellite (20) selon l'une des revendications précédentes, comportant en outre au moins un réseau de formation de faisceaux analogique statique relié à un groupe de sources du réseau (52) de sources (53).

10. - Satellite (20) selon l'une des revendications précédentes, dans lequel les réseaux de formation de faisceaux (54) analogiques adaptatifs sont adaptés à former des faisceaux utilisant des bandes fréquentielles respectives différentes.

11. - Satellite (20) selon l'une des revendications précédentes, dans lequel au moins un groupe de sources (53) est constitué par des sources agencées de manière irrégulière.

## Patentansprüche

1. Telekommunikationssatellit (20), der dazu bestimmt ist, in einer Erdumlaufbahn platziert zu werden, umfassend eine Antenne, die einen Reflektor (51) und ein Netzwerk (52) von Quellen (53) umfasst, wobei:
- der Satellit analoge adaptive Strahlformungsnetzwerke (54) umfasst, wobei die analogen adaptiven Strahlformungsnetzwerke mit jeweiligen unterschiedlichen Quellengruppen des Quellennetzwerks (53) verbunden sind, wobei die Quellengruppen jeweilige unterschiedliche geografische Regionen auf der Oberfläche der Erde bedienen,
- jedes analoge adaptive Strahlformungsnetzwerk (54) geeignet ist, gleichzeitig eine vorbestimmte Anzahl von Strahlen zu aktivieren, die jeweilige geografische Zonen (70) innerhalb der geografischen Region (60, 61) bedienen, welche von der Quellengruppe bedient wird, mit der das Strahlformungsnetzwerk verbunden ist,
- der Satellit ein Modul (55) zur Steuerung der analogen adaptiven Strahlformungsnetzwerke umfasst, das so konfiguriert ist, dass es die aktiven Strahlen jedes analogen adaptiven Strahlformungsnetzwerks modifiziert,
- jede Quellengruppe Quellen (53) umfasst, die mit anderen Quellengruppen gemeinsam genutzt werden,
**dadurch gekennzeichnet, dass:**
- mindestens eine geografische Region eine geografische Überschneidung von mindestens 30 % mit anderen geografischen Regionen aufweist.

2. Satellit (20) nach Anspruch 1, der für mindestens eine Quellengruppe zwei analoge adaptive Strahlformungsnetzwerke (54) mit jeweiligen unterschiedlichen Polarisationen umfasst.

3. Satellit (20) nach Anspruch 2, der für jede Quellengruppe zwei analoge adaptive Strahlformungsnetzwerke (54) mit jeweiligen unterschiedlichen Polarisationen umfasst.

4. Satellit (20) nach einem der vorstehenden Ansprüche, wobei mindestens zwei geografische Regionen von unterschiedlicher Fläche sind.

5. Satellit (20) nach einem der vorstehenden Ansprüche, wobei die Quellengruppen die gleiche Anzahl von Quellen umfassen.

6. Satellit (20) nach einem der Ansprüche 1 bis 4, wobei mindestens zwei Quellengruppen eine unterschiedliche Anzahl von Quellen umfassen.

7. Satellit (20) nach einem der vorstehenden Ansprüche, wobei mindestens zwei analoge adaptive Strahlformungsnetzwerke (54) geeignet sind, gleichzeitig jeweilige unterschiedliche Anzahlen von Strahlen zu formen.

8. Satellit (20) nach einem der vorstehenden Ansprüche, wobei das Netzwerk (52) von Quellen (53) in Bezug auf einen Brennpunkt des Reflektors (51) der Antenne verschoben ist.

9. Satellit (20) nach einem der vorstehenden Ansprüche, der weiter mindestens ein analoges statisches Strahlformungsnetzwerk umfasst, das mit einer Quellengruppe des Netzwerks (52) von Quellen (53) verbunden ist.

10. Satellit (20) nach einem der vorstehenden Ansprüche, wobei die analogen adaptiven Strahlformungsnetzwerke (54) geeignet sind, Strahlen zu formen, die jeweilige unterschiedliche Frequenzbänder verwenden.

11. Satellit (20) nach einem der vorstehenden Ansprüche, wobei mindestens eine Quellengruppe (53) aus unregelmäßig angeordneten Quellen besteht.

## Claims

1. - Telecommunications satellite (20) intended to be placed in earth orbit, comprising an antenna having a reflector (51) and an array (52) of feed elements (53), wherein:
- said satellite comprises adaptive analogue beam-forming networks (54), said adaptive analogue beam-forming networks being connected to different respective groups of feed elements of the array of feed elements (53), said groups of feed elements serving different respective geographic regions on the Earth's surface,
- each adaptive analogue beam-forming network (54) is suitable for simultaneously activating a predetermined number of beams serving respective geographic zones (70) within the geographic region (60, 61) served by the group of feed elements to which said beam-forming network is connected,
- said satellite comprises a module (55) for controlling said adaptive analogue beam-forming networks, configured so as to modify the active beams of each adaptive analogue beam-forming network,
- each group of feed elements comprises feed elements (53) shared with other groups of feed elements,
**characterised in that:**
- at least one geographic region has a geographic overlap of at least 30% with other geographic regions.

2. - Satellite (20) according to claim 1, comprising, for at least one group of feed elements, two adaptive analogue beam-forming networks (54) of different respective polarisations.

3. - Satellite (20) according to claim 2, comprising, for each group of feed elements, two adaptive analogue beam-forming networks (54) of different respective polarisations.

4. - Satellite (20) according to one of the preceding claims, wherein at least two geographic regions have different surface areas.

5. - Satellite (20) according to one of the preceding claims, wherein the groups of feed elements comprise the same number of feed elements.

6. - Satellite (20) according to one of claims 1 to 4, wherein at least two groups of feed elements comprise a different number of feed elements.

7. - Satellite (20) according to one of the preceding claims, wherein at least two adaptive analogue beam-forming networks (54) are suitable for simultaneously forming different respective numbers of beams.

8. - Satellite (20) according to one of the preceding claims, wherein the array (52) of feed elements (53) is offset relative to a focal point of the reflector (51) of the antenna.

9. - Satellite (20) according to one of the preceding claims, further comprising at least one static analogue beam-forming network connected to a group of feed elements of the array (52) of feed elements (53).

10. - Satellite (20) according to one of the preceding claims, wherein the adaptive analogue beam-forming networks (54) are suitable for forming beams using different respective frequency bands.

11. - Satellite (20) according to one of the preceding claims, wherein at least one group of feed elements (53) is constituted by feed elements arranged unevenly.
